Europäisches Patentamt

European Patent Office

Office européen des brevets

(19)

(11) Numéro de publication : **0 073 723**
**B1**

(12) **FASCICULE DE BREVET EUROPÉEN**

(45) Date de publication du fascicule du brevet :
09.11.88

(51) Int. Cl.⁴ : **G 21 C 17/04**

(21) Numéro de dépôt : **82401596.0**

(22) Date de dépôt : **30.08.82**

(54) Dispositif de localisation de rupture de gaine dans les assemblages combustibles d'un réacteur nucléaire à neutrons rapides.

(30) Priorité : **31.08.81 FR 8116559**

(43) Date de publication de la demande :
**09.03.83 Bulletin 83/10**

(45) Mention de la délivrance du brevet :
**09.11.88 Bulletin 88/45**

(84) Etats contractants désignés :
**BE DE GB IT NL**

(56) Documents cités :
**FR-A- 1 576 224**
**FR-A- 2 105 072**
**FR-A- 2 449 948**
**US-A- 3 005 467**
**US-A- 3 870 078**

(73) Titulaire : **NOVATOME**
**20 Avenue Edouard Herriot**
**F-92350 Le Plessis Robinson (FR)**

(72) Inventeur : **Paziaud, Alain**
**103 rue Brancas**
**F-92310, Sevres (FR)**

(74) Mandataire : **Mongrédien, André et al**
**c/o BREVATOME 25, rue de Ponthieu**
**F-75008 Paris (FR)**

## Description

L'invention concerne un dispositif de localisation de rupture de gaine d'aiguilles combustibles dans un réacteur nucléaire à neutrons rapides.

Dans les réacteurs nucléaires à neutrons rapides, il est nécessaire de contrôler en permanence, pendant le fonctionnement du réacteur, le bon fonctionnement de celui-ci. En particulier, il est nécessaire de détecter et de localiser des ruptures éventuelles des gaines des aiguilles combustibles constituant les assemblages, le plus rapidement possible après l'apparition de ces ruptures pour éviter une contamination importante des composants du réacteur. Les gaines renfermant le matériau combustible constituent en effet une première barrière d'étanchéité de celui-ci et en cas de rupture, les crayons combustibles libèrent des produits de fission dans le liquide de refroidissement du cœur. Ce liquide de refroidissement en circulation dans le réacteur, généralement constitué par du sodium liquide, traverse les assemblages combustibles de bas en haut, sur toute leur hauteur, si bien qu'en cas de fuite dans un assemblage combustible, le sodium sortant de cet assemblage à sa partie supérieure est chargé en produits de fission émettant des neutrons.

Le dispositif de détection et de localisation des ruptures de gaine dans les assemblages des réacteurs à neutrons rapides prélève du sodium liquide au-dessus de chacun des assemblages du cœur. Un module de localisation de rupture de gaine rassemble un grand nombre de conduits de prélèvement correspondant chacun à un assemblage du cœur.

Un tel module de localisation de rupture de gaine comporte un sélecteur de prélèvement susceptible d'effectuer des prélèvements successifs de sodium au niveau de chacun des conduits associés à chacun des assemblages. Une pompe aspire le sodium liquide des divers prélèvements de liquide correspondant à chacun des assemblages.

Le sélecteur comporte généralement un bras ou conduit de prélèvement entraîné en rotation dont l'extrémité est mise en communication successivement avec les extrémités des conduits associés aux assemblages qui aboutissent à la partie inférieure du sélecteur constitué par une plaque plane ayant la dimension de la section transversale du module. Les modules, généralement fixés sur un bouchon tournant appelé bouchon couvercle-cœur ménagé dans la dalle horizontale recouvrant la cuve du réacteur, pénètrent dans cette cuve et plongent dans le sodium liquide à la verticale du cœur, leurs parties inférieures recevant les conduits de prélèvement étant disposées un peu au-dessus du cœur du réacteur.

Dans les réacteurs nucléaires à neutrons rapides de grandes puissances construits actuellement, le cœur est constitué par un très grand nombre d'assemblages, de l'ordre de 500. Dans ces conditions, il est nécessaire de disposer d'un assez grand nombre de modules de localisation de rupture de gaine puisque le nombre de conduits reliés à chacun des modules est limité si l'on veut utiliser des modules ayant une section transversale qui ne soit pas trop importante.

On utilise généralement six modules exerçant une surveillance sur un nombre d'assemblages inférieur à 100. Ce nombre relativement élevé de modules augmente les coûts de construction et d'entretien du réacteur nucléaire et complique les opérations de détection et de localisation des ruptures de gaines.

On a proposé dans le brevet français FR-A-2.373.788, de réaliser le sélecteur de prélèvement du module de localisation de rupture de gaine sous la forme d'une enveloppe cylindrique à axe vertical sur la paroi latérale de laquelle sont disposés des trous suivant un parcours hélicoïdal. Des tubes de prélèvement venant des assemblages aboutissent au sélecteur au niveau de ces ouvertures dans sa paroi latérale, cependant que le dispositif de prélèvement est constitué par une pièce mobile en rotation et en translation et dont l'extrémité par où est opéré le prélèvement au niveau de chacun des tubes vient en contact frottant avec la surface intérieure de l'enveloppe cylindrique du sélecteur et décrit sur celle-ci une hélice passant par chacune des ouvertures de prélèvement.

De cette façon, on peut augmenter facilement le nombre de conduits reliés au sélecteur, en augmentant la hauteur de l'enveloppe cylindrique du sélecteur et la longueur de la course du dispositif de prélèvement mobile.

Un tel dispositif présente cependant l'inconvénient de nécessiter une pièce frottante à l'intérieur de l'enveloppe cylindrique du sélecteur qui doit avoir un jeu faible par rapport à cette surface et qui en même temps doit permettre d'éviter tout risque de blocage. Ces conditions sont très difficiles à réaliser pour du matériel immergé dans du sodium à haute température. Le fonctionnement du sélecteur étant par ailleurs de longue durée, des phénomènes d'usure viennent encore compliquer les problèmes de conception de ces sélecteurs.

Dans tous les modules connus actuellement, la partie centrale du module est occupée par l'arbre d'entraînement du sélecteur, si bien que le sodium prélevé au niveau du sélecteur doit être évacué par un tube disposé latéralement à l'intérieur du module. Pour le pompage, il faut donc utiliser une pompe électrique à conduction disposée de façon centrée dans le module mais comportant un conduit latéral de pompage intercalé sur le parcours du sodium prélevé. Une telle pompe électrique à conduction a un très mauvais rendement et une fiabilité médiocre.

En outre, le dispositif de mesure de l'activité neutronique du sodium doit être disposé au-dessus du bouchon du couvercle-cœur du réacteur, si bien qu'il est nécessaire de prendre des mesures concernant le confinement et la protection contre les rayonnements du sodium radio-actif amené dans cette zone.

Le but de l'invention est donc de proposer un dispositif de localisation de rupture de gaine dans les assemblages combustibles d'un réacteur nucléaire à neutrons rapides, par prélèvement de liquide de refroidissement du réacteur à la partie supérieure des assemblages combustibles immergés dans ce liquide et mesure d'activité neutronique du liquide prélevé comportant au moins un module de localisation de rupture de gaine comprenant un sélecteur de prélèvement constitué par une enveloppe cylindrique à axe vertical dont la surface latérale est percée d'orifices disposés suivant un parcours hélicoïdal auquel aboutissent à l'extérieur de l'enveloppe des tubes de prélèvement associés chacun à un assemblage et par un conduit de prélèvement dont la partie inférieure est coudée et se termine par une tête de prélèvement se déplaçant en contact frottant avec la surface interne de l'enveloppe cylindrique suivant un parcours hélicoïdal passant par chacun des orifices pour le prélèvement successif au niveau de chacun des tubes grâce à un organe d'entraînement tubulaire portant le conduit de prélèvement disposé avec son axe vertical et confondu avec l'axe de l'enveloppe cylindrique du sélecteur déplaçable avec le conduit de prélèvement suivant un mouvement hélicoïdal à l'intérieur de l'enveloppe, une pompe exerçant une aspiration dans le conduit de prélèvement et un détecteur de neutrons recevant les prélèvements de liquide du sélecteur, ce dispositif devant permettre d'assurer un prélèvement sans fuite au niveau du sélecteur, tout en évitant des blocages de la partie mobile de celui-ci.

Dans ce but, le conduit de prélèvement est constitué par un tube monté à l'intérieur et suivant l'axe de l'organe d'entraînement, de façon pivotante autour d'un axe horizontal situé à sa partie supérieure, ce tube portant la tête de prélèvement à sa partie inférieure, un contrepoids monté pivotant sur l'organe d'entraînement autour d'un axe horizontal s'appuyant sur la tête de prélèvement pour la maintenir contre la surface interne de l'enveloppe et l'organe d'entraînement étant en prise par sa surface externe filetée avec un écrou porté par un support fixé à l'intérieur de l'enveloppe et solidaire en rotation d'un engrenage par rapport auquel l'organe d'entraînement est libre en translation dans la direction verticale, cet engrenage étant associé à un moyen d'entraînement en rotation disposé de façon décalée latéralement par rapport à l'axe du sélecteur.

Afin de bien faire comprendre l'invention, on va maintenant décrire à titre d'exemple non limitatif un mode de réalisation d'un dispositif de localisation de rupture de gaine suivant l'invention par comparaison avec un dispositif de localisation suivant l'art antérieur.

La figure 1 représente dans une vue en élévation avec coupe partielle, un module d'un dispositif de localisation de rupture de gaine suivant l'art antérieur.

La figure 2 représente dans une vue identique à la vue de la figure 1, un module d'un dispositif de localisation de rupture de gaine suivant l'invention.

La figure 3 représente dans une vue en coupe par un plan vertical, la partie inférieure du module représenté à la figure 2 comportant en particulier le sélecteur.

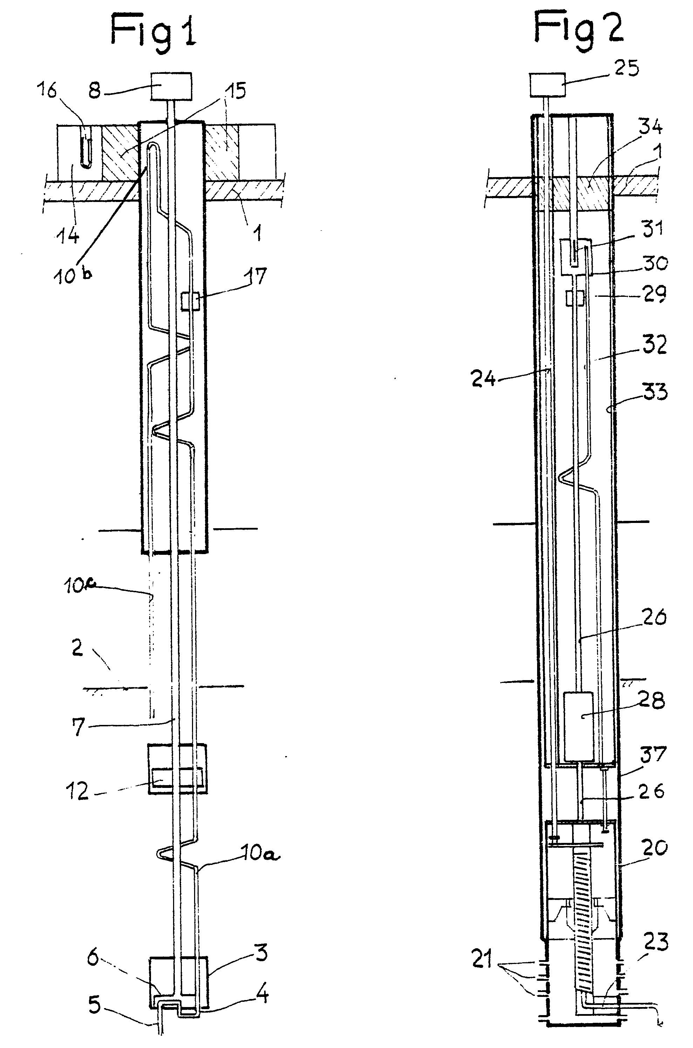

Sur la figure 1, on voit un module de localisation de rupture de gaine fixé sur le bouchon du couvercle-cœur 1 d'un réacteur nucléaire à neutrons rapides. Ce bouchon 1 vertical est monté rotatif sur la dalle du réacteur recouvrant la cuve remplie de sodium liquide jusqu'au niveau 2 et contenant le cœur du réacteur.

Le module de localisation est constitué par une structure verticale de grande longueur dont la partie inférieure est disposée à la verticale du cœur du réacteur. La partie inférieure de ce module est constituée par le sélecteur 3 dont la plaque inférieure 4 est percée d'orifices recevant chacun un tube de prélèvement 4 dont l'extrémité non reliée au sélecteur est disposée au-dessus d'un assemblage particulier du cœur.

A l'intérieur du sélecteur, le conduit de prélèvement mobile 6 est mis en rotation par un arbre 7 traversant le module axialement suivant toute sa hauteur jusqu'au moteur d'entraînement 8 disposé au-dessus du bouchon du couvercle-cœur.

Les trous dans la plaque 4 du sélecteur sont disposés suivant au moins une couronne circulaire, la rotation du conduit de prélèvement 6 permettant un balayage de l'ensemble de ces trous et un prélèvement dans l'ensemble des conduits 5, au cours d'un tour complet du bras 6.

Le sodium liquide prélevé par le bras 6 est évacué par un tube 10a, 10b, 10c dont le parcours est décalé latéralement par rapport à l'axe du module.

Une pompe électromagnétique à conduction 12 permet un pompage dans la branche 10a du tube, malgré la disposition latérale du tube par rapport à la pompe. Grâce à la pompe 12, les prélèvements effectués à la partie supérieure des assemblages parviennent successivement à la partie supérieure du module constituée par un dispositif de mesure d'activité neutronique 14 à l'intérieur duquel la partie 10b du tube permet une circulation du sodium actif au voisinage d'un détecteur de neutrons.

Le dispositif de mesure 14 comporte des parois d'isolement en plomb de forte épaisseur 15 et un détecteur de neutrons 16 disposé à l'extérieur de ces parois. L'ensemble du dispositif 14 repose sur la surface supérieure du bouchon du couvercle-cœur 1.

Après son parcours dans le dispositif de mesure 14, le sodium redescend par la branche 10c du tube dans la cuve du réacteur, où il se mélange avec le sodium de refroidissement remplissant la cuve, sous le niveau 2.

Sur la branche 10a du tube correspondant au parcours ascendant du sodium est placé un débitmètre 17 permettant de mesurer le débit de sodium à chaque instant.

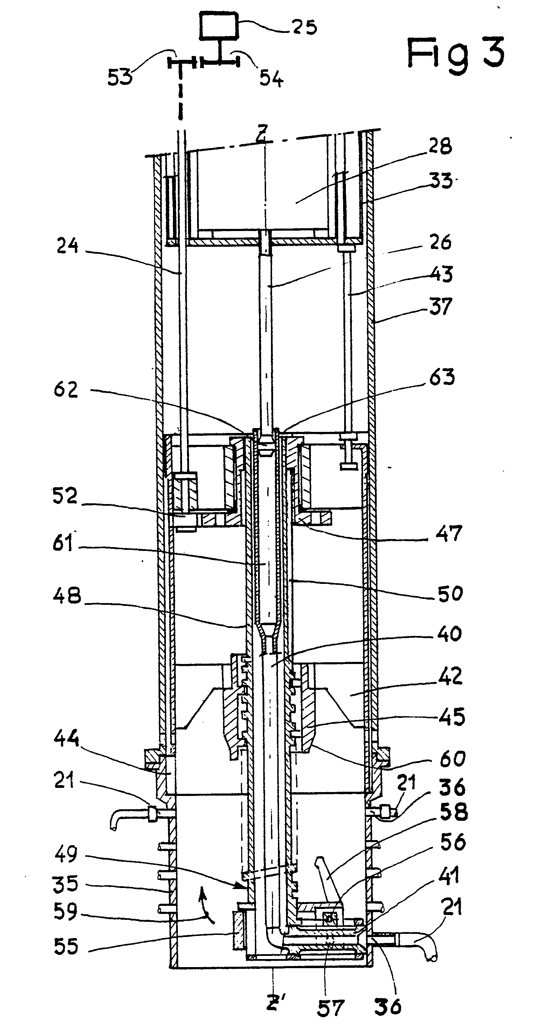

Sur la figure 2, on voit une représentation de l'ensemble d'un module suivant l'invention comportant à sa partie inférieure un sélecteur 20 ayant une enveloppe cylindrique sur la surface latérale de laquelle débouchent les tubes de prélèvement de sodium 21. On décrira ce sélecteur plus en détails en se référant à la figure 3.

Le conduit de prélèvement mobile 23 du sélecteur vient en contact par son extrémité inférieure, successivement avec chacun des conduits 21 reliés chacun à un assemblage du cœur.

L'arbre 24 d'entraînement du sélecteur est disposé de façon décalée par rapport à l'axe du module et relié à sa partie supérieure à un moteur 25.

Il est donc possible de disposer suivant l'axe du module le conduit 26 d'évacuation des prélèvements de sodium. Ceci a l'avantage de permettre l'utilisation d'une pompe électromagnétique à induction 28 avec un pompage dans la direction axiale.

Sur la conduite 26 d'évacuation des prélèvements est également disposé un débitmètre 29 et le dispositif de mesure 30. Le dispositif 30 est constitué par un réservoir de sodium alimenté à sa partie inférieure par le conduit 26 et à l'intérieur duquel plonge un détecteur de neutrons 31.

Trois tubes 32 disposés latéralement servent de trop plein au réservoir 30 et déversent le sodium dans la cuve du réacteur où il se mélange avec le sodium de refroidissement remplissant celle-ci.

L'ensemble du module est contenu dans une enveloppe cylindrique 33 de grande hauteur. Un dispositif de fermeture 34 en matériau absorbant, de grande épaisseur, permet d'isoler complètement la zone où se trouve du sodium actif de la zone extérieure à la cuve disposée au-dessus du bouchon du couvercle-cœur.

Sur la figure 3, on voit la partie inférieure du module comportant le sélecteur dont l'enveloppe cylindrique 35 non démontable constitue le prolongement d'un fourreau 37 entourant l'enveloppe cylindrique 33 du module.

La surface latérale de l'enveloppe cylindrique 35 est percée de trous 36 disposés suivant un parcours hélicoïdal sur cette enveloppe.

Dans chacun des trous 36 vient se loger l'extrémité d'un tube 21 associé à un assemblage du cœur.

Le conduit de prélèvement mobile du sélecteur est constitué par un tube 40 coudé à son extrémité inférieure et solidaire, à cette extrémité, d'une tête de prélèvement 41 en un matériau métallique résistant à l'usure.

A l'intérieur du tube fourreau 37 solidaire du bouchon couvercle-cœur est appuyé un support fixe 42 relié à l'enveloppe 33 par l'intermédiaire de tirants 43 et placé en position angulaire fixe par rapport à l'enveloppe cylindrique 35 grâce à un clavetage 44. Le support 42 repose par sa partie inférieure sur l'enveloppe cylindrique 35.

Ce support 42 porte à sa partie inférieure au voisinage de l'axe ZZ' du module et de l'enveloppe cylindrique 35 un écrou 45 rigidement solidaire du support.

Un engrenage 47 est monté rotatif sur le support 42 à sa partie supérieure. L'axe de rotation de l'engrenage 47 et l'axe de symétrie de l'écrou 45 sont confondus avec l'axe ZZ' du module et du sélecteur.

Le conduit de prélèvement 40 du sélecteur est monté dans la direction axiale ZZ' à l'intérieur d'un organe d'entraînement tubulaire 48 comportant un filetage 49 sur une partie de sa longueur. L'écrou 45 et la partie filetée de l'organe d'entraînement 48 constituent un système vis-écrou permettant un déplacement hélicoïdal du conduit de prélèvement par mise en rotation de l'organe d'entraînement 48 autour de l'axe ZZ'. Le conduit de prélèvement 40 est en effet relié à sa partie supérieure à l'organe d'entraînement 48 de façon à être solidaire de cet organe 48 en rotation autour de l'axe ZZ' et en translation suivant cet axe.

La mise en rotation de l'organe d'entraînement tubulaire 48 autour de l'axe ZZ' est effectuée grâce à l'engrenage 47 engagé sur une partie supérieure non filetée de l'organe d'entraînement 48.

Cette partie supérieure de l'organe 40 comporte des cannelures 50 qui s'engagent dans des rainures correspondantes usinées dans l'alésage intérieur de l'engrenage 47.

De cette façon, l'organe d'entraînement tubulaire 48 est solidaire en rotation autour de l'axe ZZ' mais libre en translation dans la direction ZZ' par rapport à l'engrenage 47 monté rotatif sur le support fixe 42.

L'engrenage 47 est lui-même entraîné en rotation grâce à un engrenage 52 monté sur l'arbre de commande 24 du sélecteur lui-même entraîné en rotation par l'intermédiaire d'engrenages 53 et 54 par le moteur 25.

Le conduit de prélèvement 40 est rendu solidaire en rotation et en translation verticale de l'organe d'entraînement 48 grâce à des bouts d'axes 63 horizontaux et solidaires de l'organe 48 sur lesquels le conduit de prélèvement 40 est monté rotatif. De cette façon, le conduit de prélèvement 40 et la tête de prélèvement 41 peuvent pivoter légèrement à l'intérieur de l'organe d'entraînement 48, autour de la direction horizontale commune aux deux bouts d'axes 63.

Un contrepoids 55 est monté articulé en 56 sur l'extrémité du support tubulaire 48 et s'appuie sur la tête de prélèvement 41, pour la maintenir contre la surface intérieure de l'enveloppe cylindrique 35 avec une pression constante.

A cet effet, le contrepoids 55 est réalisé sous la forme d'une portion de couronne disposée autour de l'organe d'entraînement tubulaire 48 et venant en prise latéralement avec deux pions tels que 57 solidaires de la tête de prélèvement 41. Le contrepoids 55 peut ainsi exercer sur la tête de prélèvement 41 une force la maintenant appliquée contre la surface intérieure de l'enveloppe cylindrique 35.

Le contrepoids est également solidaire d'un doigt d'actionnement 58 qui provoque son basculement dans le sens de la flèche 59 lorsque l'extrémité de ce doigt d'actionnement vient en contact avec une rampe 60 usinée sur la surface extérieure de l'écrou 45 sur le support fixe 42, en fin de mouvement vers le haut de l'organe d'entraînement tubulaire 48.

Ce basculement du contrepoids 55 entraîne un mouvement de la tête de prélèvement 41 l'éloignant de la surface intérieure de l'enveloppe cylindrique 35, par l'intermédiaire des pions 57 engagés dans une ouverture ménagée dans le contrepoids.

Le transport du sodium prélevé par le conduit 40 vers la partie supérieure du module est assuré grâce au conduit axial 26 sur lequel est disposée axialement la pompe électromagnétique à induction 28.

La partie inférieure du conduit 26 est engagée dans une portion élargie 61 du conduit 40, l'étanchéité entre le conduit 26 et le conduit 40 étant assurée grâce à l'extrémité sphérique 62 du conduit 26 venant en contact avec la surface cylindrique de la portion 61 du conduit 40. Cette étanchéité sphère sur cylindre subsiste lors des pivotements de faible amplitude du conduit de prélèvement 40 lors de son déplacement à l'intérieur de l'enveloppe cylindrique 35.

Nous allons maintenant décrire en nous référant aux figures 2 et 3, le fonctionnement du dispositif suivant l'invention.

Lorsque le module est en place, les différents tubes de prélèvement 21 débouchant à la partie supérieure des assemblages, la mise en fonctionnement du moteur 25 et de la pompe 28 permettent de réaliser de façon continue le prélèvement et la détection sur le sodium prélevé.

En effet, grâce aux engrenages 52, 53, 54 et 47 et à l'écrou 45, l'organe d'entraînement tubulaire 48, le conduit de prélèvement 40 et la tête 41 se déplacent dans un mouvement hélicoïdal correspondant à un balayage des trous 36 par la tête 41. Quels que soient les mouvements de la tête 41, celle-ci est maintenue contre la surface interne de l'enveloppe 35 avec une pression constante grâce au contrepoids 55. On évite ainsi tout frottement excessif et toute perte d'étanchéité entre la tête de prélèvement et les conduits 37.

La pompe 28 exerce dans le conduit 40, par l'intermédiaire du conduit 26, une aspiration permettant le prélèvement de sodium dans les tubes 37 puis le transport de ce sodium dans le réservoir 30.

Le détecteur 31 permet de déceler une activité neutronique anormale dans le prélèvement. La connaissance de la position du sélecteur permet de déterminer alors une rupture de gaine au niveau d'un assemblage particulier.

Le prélèvement est ensuite évacué par le trop plein 32.

Le débitmètre 29 est un débitmètre électromagnétique classique mais il est placé à l'intérieur d'une chemise métallique qui permet une dissipation de chaleur importante.

La pompe électromagnétique à induction 28 placée axialement sur la conduite de sodium 26 a un excellent rendement et le pompage s'effectue dans de très bonnes conditions.

L'ensemble du sodium utilisé pour la détection reste dans une zone située sous la plaque supérieure du bouchon du couvercle-cœur si bien qu'aucune précaution n'est à prendre pour isoler la zone de mesure.

La fixation par tirants du support 42 reposant par sa partie inférieure sur l'enveloppe 35 permet d'éliminer les inconvénients venant de dilatations différentielles entre le bouchon du couvercle-cœur et l'enveloppe du module. Le support 42 est en effet libre de se déplacer dans la direction axiale par rapport à l'enveloppe 33 du module.

Pour les opérations de montage ou de démontage du module, il peut être intéressant d'escamoter complètement l'ensemble mobile du sélecteur à l'intérieur du support 42. Il suffit alors de provoquer un mouvement vers le haut de l'organe d'entraînement 48 au-delà de sa position la plus haute correspondant au prélèvement sur le dernier tube placé sur l'enveloppe 35.

Le doigt 58 vient alors en contact avec la rampe 60 qui efface la tête de prélèvement 41 vers l'intérieur pour la décoller de la surface de l'enveloppe 35. On peut alors poursuivre la remontée du dispositif à l'intérieur du support 42.

Grâce aux tirants 43 on peut alors remonter l'ensemble de la partie mobile du sélecteur indépendamment du fourreau 37.

Il apparaît donc que les principaux avantages du dispositif selon l'invention sont de permettre un contact parfait entre la tête de prélèvement et l'enveloppe cylindrique du sélecteur, sans risque de blocage, de faciliter le pompage d'aspiration des prélèvements de sodium en permettant un parcours axial de ce sodium et d'effectuer la mesure d'activité sur les prélèvements de sodium sous le niveau du couvercle-cœur.

Le dispositif suivant l'invention permet de relier le sélecteur à un nombre important de tubes de prélèvement, par exemple 225 tubes correspondant à un nombre égal d'assemblages. De cette façon il n'est plus nécessaire d'utiliser un grand nombre de modules mais seulement deux ou trois modules pour les réacteurs nucléaires construits actuellement.

On peut imaginer un autre mode de liaison entre l'organe d'entraînement 48 et l'engrenage 47 différent de celui qui a été décrit, au lieu de cannelures, l'organe d'entraînement peut porter des rainures à l'intérieur desquelles vient s'engager une ou plusieurs clavettes solidaires de l'engrenage 47.

On peut imaginer une liaison entre le conduit de prélèvement et l'organe tubulaire d'entraînement 48 différent d'une liaison par des bouts d'axes horizontaux. On peut même imaginer une liaison rigide du conduit de prélèvement à sa partie supérieure sur l'organe d'entraînement, les mouvements de pivotement du conduit de prélèvement n'étant plus obtenus par balancement pendulaire de ce conduit de prélèvement mais par flexion du tube 40 élastique et de grande longueur.

Enfin, l'invention s'applique dans tous les cas où l'on effectue la détection et la localisation de rupture de gaines dans un réacteur nucléaire à neutrons rapides.

**Revendications**

1. Dispositif de localisation de rupture de gaine dans les assemblages combustibles d'un réacteur nucléaire à neutrons rapides, par prélèvement de liquide de refroidissement au-dessus des assemblages combustibles immergés dans ce liquide et mesure d'activité neutronique du liquide prélevé, comportant au moins un module de localisation de rupture de gaine comprenant un sélecteur de prélèvement (20) constitué par une enveloppe cylindrique (35), à axe vertical dont la surface latérale est percée d'orifices (36) disposés suivant un parcours hélicoïdal auquel aboutissent, à l'extérieur de l'enveloppe, des tubes de prélèvement (21) associés chacun à un assemblage du cœur et par un conduit de prélèvement (40) dont la partie inférieure est coudée et se termine par une tête de prélèvement (41) qui se déplace en contact frottant avec la surface interne de l'enveloppe cylindrique (35) suivant un parcours hélicoïdal passant par chacun des orifices (36) pour le prélèvement successif au niveau de chacun des tubes (21) grâce à un organe d'entraînement tubulaire (48) portant le conduit de prélèvement (40) disposé avec son axe vertical et confondu avec l'axe de l'enveloppe cylindrique (35) du sélecteur (20), déplaçable avec le conduit de prélèvement suivant un mouvement hélicoïdal à l'intérieur de l'enveloppe (35), une pompe (28) exerçant une aspiration dans le conduit de prélèvement (40) et un détecteur de neutrons (31) recevant les prélèvements de liquide du sélecteur (20), caractérisé par le fait que le conduit de prélèvement (40) est constitué par un tube monté à l'intérieur et suivant l'axe de l'organe d'entraînement (48), de façon pivotante autour d'un axe horizontal situé à sa partie supérieure, ce tube portant la tête de prélèvement (41) à sa partie inférieure, un contrepoids (55) monté pivotant sur l'organe d'entraînement (48) autour d'un axe horizontal s'appuyant sur la tête de prélèvement (41) pour la maintenir contre la surface interne de l'enveloppe (35) et l'organe d'entraînement (48) étant en prise par sa surface externe filetée (49) avec un écrou (45) porté par un support (42) fixé à l'intérieur de l'enveloppe (35) et solidaire en rotation d'un engrenage (47) par rapport auquel l'organe d'entraînement (48) est libre en translation dans la direction verticale, cet engrenage (47) étant associé à un moyen d'entraînement en rotation (24, 52) disposé de façon décalée latéralement par rapport à l'axe du sélecteur (20).

2. Dispositif de localisation suivant la revendication 1, caractérisé par le fait que le conduit de prélèvement (40) du sélecteur (20) est relié à une conduite d'évacuation (26) du liquide prélevé, de direction axiale par rapport au sélecteur (20) et au module, sur laquelle est disposée une pompe électromagnétique à induction (28) pour le transport du sodium prélevé, vers le détecteur de neutrons (31) à la partie supérieure du module.

3. Dispositif de localisation suivant la revendication 2, caractérisé par le fait que la liaison entre le conduit de prélèvement (40) et la conduite d'évacuation (26) est assurée par une liaison sphère sur cylindre permettant les pivotements du conduit de prélèvement (40).

4. Dispositif de localisation suivant l'une quelconque des revendications 2 et 3, caractérisé par le fait que le détecteur de neutrons (31) est disposé à l'intérieur d'un réservoir (30) relié à la conduite d'évacuation (26) pour recevoir le métal liquide prélevé et disposé en dessous de la plaque supérieure du bouchon couvercle-cœur (1) du réacteur.

5. Dispositif de localisation suivant l'une quelconque des revendications 2, 3 et 4, comportant un débitmètre électromagnétique (29) intercalé sur la conduite d'évacuation (26) entre le sélecteur (20) et le détecteur de neutrons (31), caractérisé par le fait que ce débitmètre électromagnétique (29) est placé dans une chemise métallique permettant une forte dissipation de chaleur.

6. Dispositif de localisation suivant l'une quelconque des revendications 1, 2, 3, 4 et 5, caractérisé par le fait que le contrepoids (55) est solidaire d'un doigt d'actionnement (58) susceptible de coopérer avec une partie (60) du support fixe (42) en fin de mouvement vers le haut de l'organe d'entraînement (48) et du conduit de prélèvement (40) pour le basculement du contrepoids (55) et l'éloignement de la tête de prélèvement (41) de la surface interne de l'enveloppe cylindrique (35).

7. Dispositif de localisation suivant l'une quelconque des revendications 1, 2, 3, 4, 5 et 6, caractérisé par le fait que le module comporte une paroi cylindrique (33) de grande longueur à l'extrémité inférieure de laquelle est suspendu le support (42) reposant sur l'enveloppe cylindrique (35), de façon à pouvoir se déplacer dans la direction axiale sous l'effet de dilatations différentielles.

**Claims**

1. Device for locating a cladding rupture in the fuel assemblies of a fast neutron nuclear reactor, by sampling coolant liquid above the fuel assemblies immersed in this liquid and measuring the neutron activity of the sampled liquid, comprising at least one cladding rupture locator unit comprising a sampling selector (20) consisting of a cylindrical enclosure (35) with a vertical axis whose side surface is pierced with orifices (36) arranged along a helical path into which are led, outside the enclosure, sampling tubes (21), each associated with a core assembly and with a sampling conduit (40) whose lower part forms an elbow and ends in a sampling head (41) which moves in rubbing contact with the inner surface of the cylindrical enclosure (35) following a helical path passing via each of the orifices (36) for the successive sampling at each of the tubes (21) by virtue of a tubular driving member (48) carrying the sampling conduit (40) arranged with its axis vertical and coinciding with the axis of the cylindrical enclosure (35) of the selector (20), capable of being moved with the sampling conduit following a helical movement inside the enclosure (35), a pump (28 applying a suction in the sampling conduit (40) and a neutron detector (31) receiving the liquid samples from the selector (20), characterized in that the sampling conduit (40) consists of a tube mounted inside and following the axis of the driving member (48), so as to pivot around a horizontal axis situated in its upper part, this tube carrying the sampling head (41) in its lower part, a counterweight (55) mounted so that it pivots on the driving member (48) around a horizontal axis resting on the sampling head (41) to hold it against the inner surface of the enclosure (35) and the driving member (48) being engaged via its threaded outer surface (49) with a nut (45) carried by a support (42) fastened to the inside of the enclosure (35) and integral in rotation with a gear (47) with regard to which the driving member (48) is free in translation in the vertical direction, this gear (47) being associated with a means for driving in rotation (24, 52) arranged so that it is offset sideways relative to the axis of the selector (20).

2. Locating device according to Claim 1, characterized in that the sampling conduit (40) of the selector (20) is connected to a discharge line (26) for the liquid sample, in an axial direction relative to the selector (20) and to the unit, in which an electromagnetic induction pump (28) is arranged for conveying the sodium sample towards the neutron detector (31) in the upper part of the unit.

3. Locating device according to Claim 2, characterized in that the connection between the sampling conduit (40) and the discharge line (26) is provided by a sphere-to-cylinder connection allowing the sampling conduit (40) to pivot.

4. Locating device according to either of Claims 2 and 3, characterized in that the neutron detector (31) is arranged inside a storage vessel (30) connected to the discharge line (26) to receive the liquid metal sample and is arranged below the upper plate of the core coverplug (1) of the reactor.

5. Locating device according to any one of Claims 2, 3 and 4, comprising an electromagnetic flow meter (29) inserted in the discharge line (26) between the selector (20) and the neutron detector (31), characterized in that this electromagnetic flow meter (29) is placed in a metal jacket permitting a high heat loss.

6. Locating device according to any one of Claims 1, 2, 3, 4 and 5, characterized in that the counterweight (55) is integral with an actuating finger (58) capable of interacting with a part (60) of the stationary support (42) at the end of an upward movement of the driving member (48) and of the sampling conduit (40) for tipping the counterweight (55) over and for moving the sampling head (41) away from the inner surface of the cylindrical enclosure (35).

7. Locating device according to any one of Claims 1, 2, 3, 4, 5 and 6, characterized in that the unit comprises a cylindrical wall (33) of great length at the lower end of which the support (42) resting on the cylindrical enclosure (35) is suspended so as to be capable of moving in the axial direction under the effect of differential expansions.

## Patentansprüche

1. Vorrichtung zur Lokalisierung von Bruchstellen in Hüllen von Brennelementen eines schnellen Brüters durch Entnahme von Kühlflüssigkeit oberhalb der in diese Flüssigkeit eingetauchten Brennelemente und Messen der Neutronenaktivität der abgezogenen Flüssigkeit, mit wenigstens einem Modul zur Lokalisierung der Bruchstelle der Hülle, umfassend eine Entnahmewähleinrichtung (20), die von einem zylindrischen Mantel (35) mit vertikaler Achse, dessen Seitenoberfläche von Öffnungen (36) durchbohrt ist, die längs eines schraubenförmigen Weges angeordnet sind, an den außerhalb des Mantels Entnahmerohre (21) anstoßen, von denen jedes einem Brennelement des Kerns zugeordnet ist, und von einer Entnahmeleitung (40) gebildet ist, deren unterer Abschnitt gekrümmt ist und mit einem Entnahmekopf (41) endet, der sich in Reibungsberührung mit der inneren Oberfläche des zylindrischen Mantels (35) längs eines schraubenförmigen Wegs bewegt, wobei er sich an jeder der Öffnungen (36) zur aufeinanderfolgenden Entnahme auf der Höhe von jedem Rohr (21) dank eines rohrförmiges Antriebsorgans (48) vorbeibewegt, welches mit vertikaler und mit der Achse des zylindrischen Mantels (35) der Wähleinrichtung (20) zusammenfallenden Achse angeordnet und mit der Entnahmeleitung mit einer schraubenförmigen Bewegung im Inneren des Mantels (35) bewegbar ist, einer Pumpe (28), die ein Ansaugen in der Entnahmeleitung (40) ausübt, sowie einem Neutronendetektor (31), der die von der Wähleinrichtung (20) entnommene Flüssigkeit erhält, dadurch gekennzeichnet, daß die Entnahmeleitung (40) von einem Rohr gebildet ist, welches im Inneren und längs der Achse des Antriebsorgans (48) um eine horizontale Achse verschwenkbar angebracht ist, die sich an ihrem oberen Abschnitt befindet, diese Leitung an seinem unteren Abschnitt den Entnahmekopf (41) trägt, ein Ausgleichsgewicht (55) um eine sich an dem Entnahmekopf (41) abstützende, horizontale Achse verschwenkbar an dem Antriebsorgan (48) angebracht ist, um diesen gegen die innere Oberfläche des Mantels (35) zu halten, und das Antriebsorgan (48) mit seiner äußeren, ein Gewinde aufweisenden Oberfläche (49) mit einer Mutter (45) in Eingriff steht, die von einer im Inneren des Mantels (35) befestigten Stütze (42) gehalten ist, und mit einem Zahnradgetriebe (47) drehfest verbunden ist, in bezug auf welches das Antriebsorgan (48) in der vertikalen Richtung frei verschiebbar ist, wobei dieses Zahnradgetriebe (47) mit einer Drehantriebseinrichtung (24, 52) verbunden ist, die in bezug auf die Achse der Wähleinrichtung (20) seitlich versetzt angeordnet ist.

2. Lokalisierungsvorrichtung nach Anspruch 1, dadurch gekennzeichnet, daß die Entnahmeleitung (40) der Wähleinrichtung (20) mit einer Austragsleitung (26) für die entnommene Flüssigkeit verbunden ist, die in bezug auf die Wähleinrichtung (20) und die Einheit in axialer Richtung angeordnet ist und an der eine elektromagnetische Induktionspumpe (28) zur Förderung des entnommenen Natriums zu dem Neutronendetektor (31) am oberen Abschnitt des Moduls angeordnet ist.

3. Lokalisierungsvorrichtung nach Anspruch 2, dadurch gekennzeichnet, daß die Verbindung zwischen der Entnahmeleitung (40) und der Austragsleitung (26) von einer Kugel-Zylinderverbindung sichergestellt ist, die die Schwenkungen des Abziehrohrs (40) erlaubt.

4. Lokalisierungsvorrichtung nach irgendeinem der Ansprüche 2 und 3, dadurch gekennzeichnet, daß der Neutronendetektor (31) im Inneren eines mit der Austragsleitung (26) verbundenen Behälters (30) zur Aufnahme des entnommenen Flüssigmetalls und unterhalb der oberen Platte des Kerndeckels (1) des Reaktors angeordnet ist.

5. Lokalisierungsvorrichtung nach irgendeinem der Ansprüche 2, 3 und 4, welche einen elektromagnetischen Flußmesser (29) aufweist, der an der Austragsleitung (26) zwischen der Wähleinrichtung (20) und dem Neutronendetektor (31) zwischengeschaltet ist, dadurch gekennzeichnet, daß dieser elektromagnetische Flußmesser (29) in einem Metallmantel untergebracht ist, der eine starke Wärmeableitung ermöglicht.

6. Lokalisierungsvorrichtung nach irgendeinem der Ansprüche 1, 2, 3, 4 und 5, dadurch gekennzeichnet, daß das Ausgleichsgewicht (55) mit einem Betätigungsfinger (58) fest verbunden ist, der mit einem Abschnitt (60) der festen Stütze (42) am oberen Bewegungsende des Antriebsorgans (48) und des Abziehrohrs (40) zusammenarbeiten kann, um das Ausgleichsgewicht (55) zu verschwenken und den Abziehkopf (41) von der inneren Oberfläche des zylindrischen Mantels (35) zu entfernen.

7. Lokalisierungsvorrichtung nach irgendeinem der Ansprüche 1, 2, 3, 4, 5 und 6, dadurch gekennzeichnet, daß der Modul eine zylindrische Wand (33) großer Länge aufweist, an dessen unterem Ende die auf dem zylindrischen Mantel (35) ruhende Stütze (42) derart aufgehängt ist, daß sie sich in axialer Richtung aufgrund des Wärmedehnungsunterschiedes bewegen kann.

Fig 1

Fig 2

0 073 723

Fig 3